# EUROPÄISCHE PATENTSCHRIFT

(11) **EP 2 340 885 B1**
(45) Veröffentlichungstag und Bekanntmachung des Hinweises auf die Patenterteilung: **22.04.2015**
(21) Anmeldenummer: 09180325.4
(22) Anmeldetag: 22.12.2009
(51) Int. Cl.: B01D 53/08, B01D 53/10

(54) **Verfahren und Anlage zur Rauchgas-Reinigung**
Method and assembly for cleaning waste gas
Procédé et installation de nettoyage de gaz de fumée

(43) Veröffentlichungstag der Anmeldung: 06.07.2011
(73) Patentinhaber: AWG Abfallwirtschaftsgesellschaft mbH Wuppertal, 42349 Wuppertal (DE)
(72) Erfinder: Tschersich, Conrad, 58256 Ennepetal (DE); Siebert, Rüdiger, 42119 Wuppertal (DE); Mettegang, Karsten, 58332 Schwelm (DE)
(74) Vertreter: Patentanwälte Dr. Solf & Zapf

(56) Entgegenhaltungen:
- EP-A2- 1 275 430
- DE-A1- 19 542 065
- US-A1- 2009 158 929

## Beschreibung

Die vorliegende Erfindung betrifft zunächst ein Verfahren zur Rauchgas-Reinigung, wobei dem Rauchgas ein Reagenz zum Abscheiden von Schwermetall, insbesondere Quecksilber und Dioxin, zugeführt wird.

Ferner betrifft die Erfindung auch eine Anlage zur Rauchgas-Reinigung nach dem erfindungsgemäßen Verfahren.

Ein Verfahren und eine Anlage gemäß den Oberbegriffen der unabhängigen Ansprüche sind in der Schrift EP 1 275 430 A2 offenbart.

Die Erfindung soll insbesondere bei der Verbrennung von Müll aller Art, d. h. in einer Müllverbrennungsanlage, zur Anwendung kommen. Das dabei entstehende Rauchgas (Abgas) macht bestimmte Maßnahmen zur Rauchgas-Reinigung erforderlich.

Die Rauchgas-Reinigung kann in einer Wäscheranlage, einer Trockensorption oder als Verfahren mit Natriumbicarbonat erfolgen. Nachfolgend wird der Begriff "Rauchgas-Reinigung" als Überbegriff für alle genannten Verfahren zur Rauchgas-Reinigung verwendet.

Bei einem Trockensorptionsverfahren erfolgt eine Staub- und Schadstoffabscheidung simultan an einem Gewebefilter. Dabei wird ein pulverförmiges Reagenz, beispielsweise Kalkhydrat (Kalziumhydroxid) oder Natriumhydrogencarbonat, in den Rauchgasstrom geblasen und dann am Filter (Schlauchfilter) abgeschieden und entsorgt. Durch chemische Reaktionen zwischen dem Reagenz und den gasförmigen Schadstoffen, wie vor allem Chlorwasserstoff (HCl), Fluorwasserstoff (HF) und Schwefeldioxid (SO₂), werden diese Schadstoffe an dem Reagenz gebunden und somit gemeinsam mit diesem am Filter abgeschieden. Die Effektivität der Schadstoffabscheidung ist in erster Linie abhängig von der relativen Rauchgasfeuchte. Durch Abkühlen des Rauchgases und Eindüsung von Wasser wird die relative Rauchgasfeuchte eingestellt. In diesem Fall spricht man von einer konditionierten Trockensorption.

Bei einer Nasswäsche erfolgt die Abscheidung der Schadgase durch Zugabe einer Waschflüssigkeit, meist Natronlauge und/oder Wasser. Die durch Reaktionen mit den Schadgasen entstehenden Produkte werden mit der restlichen Waschflüssigkeit ausgetragen.

Weiterhin wird zur Rauchgas-Reinigung häufig eine Adsorption für eine selektive Abscheidung von flüchtigen Schwermetallen, insbesondere Quecksilber (Hg), Dioxinen und Furanen, eingesetzt. Dabei handelt es sich um ein thermisches Trennverfahren, bei dem bestimmte Komponenten aus dem Rauchgas, vorwiegend organische Verbindungen, an der Oberfläche grenzflächenaktiver Feststoffe aufgenommen werden. Die abzutrennende Komponente wird Adsorptiv und der Feststoff Adsorbens genannt. Bei der Rauchgas-Reinigung in Müllverbrennungsanlagen wird als Adsorbens in der Regel Kohlenstoff eingesetzt, und zwar in Form von Aktivkohle oder Herdofenkoks. Im Folgenden wird hier vereinfacht der Begriff "Koks" als allgemeiner Überbegriff für Aktivkohle und/oder Herdofenkoks, abgekürzt HOK, gebraucht. Bei Adsorbern in der Rauchgas-Reinigung wird das Adsorbens in Behältern untergebracht, durch die das beladene, zu reinigende Abgas (Rauchgas) geleitet wird. Neben statischen Adsorbern, so genannten Festbettadsorbern, die diskontinuierlich in Abwechslung mit einer Regeneration betrieben werden, kommen heute häufig kontinuierlich durchströmte Wanderbettadsorber zum Einsatz, durch die das Rauchgas entweder im Kreuz- oder Gegenstrom geleitet wird. Weiterhin können auch Flugstrom- oder Wirbelschichtadsorber eingesetzt werden, bei denen das Adsorbens mit dem Gasstrom mitgetragen wird oder turbulent auf einem Rost wirbelt. Der hier und im Folgenden verwendete Begriff "Wanderbettadsorber" soll als Überbegriff für alle Arten von kontinuierlich durchströmten Adsorbern verstanden werden.

Grundsätzlich kann das nach einer bestimmten Einsatzzeit mit Schadstoffen beladene Adsorbens durch bestimmte Verfahren gereinigt und reaktiviert werden, was allerdings mit einem recht hohen Aufwand verbunden ist. Besonders in Müllverbrennungsanlagen ist es daher üblich, den beladenen Koks (Altkoks) unter Nutzung seines Energiegehaltes in dem Verbrennungskessel zu verbrennen oder - z. B. unter Tage - zu lagern (Endlagerung). Bei der Verbrennung wird der Altkoks aus der Adsorptionsstufe direkt oder nach einer Aufmahlung in die Feuerung zurückgeführt. Nachteil dieses Verfahrens ist, dass durch Verbrennen von Altkoks einerseits die Kapazität der Feuerung hinsichtlich des Müllvolumens eingeschränkt wird, d. h. es kann weniger Müll verbrannt werden. Andererseits wird bei der Verbrennung von Müll und Altkoks zusätzliches Quecksilber mobilisiert. Um dieses Quecksilber abzuscheiden, ist es bisher notwendig, in der Trockensorption als weiteres Reagenz frischen Koks (HOK) zu dosieren. Dadurch entstehen aber zusätzliche Kosten.

Der Erfindung liegt die Aufgabe zu Grunde, ein Verfahren anzugeben, um für eine Verbrennung, insbesondere eine Müllverbrennung, mit effektiver Rauchgas-Reinigung eine verbesserte Wirtschaftlichkeit zu erreichen. Ferner soll auch eine optimierte Anlage zur Durchführung des Verfahrens geschaffen werden.

Erfindungsgemäß wird dies durch ein Verfahren gemäß dem Anspruch 1 bzw. durch eine Anlage nach dem Anspruch 7 erreicht. Vorteilhafte Ausführungen sind in den abhängigen Ansprüchen und der anschließenden Beschreibung enthalten.

Erfindungsgemäß wird demnach als Reagenz zur Schwermetall-Abscheidung ein bereits mit Schadstoffen beladenes Kohlenstoff-Adsorbens (beladener Alt-Koks) zugeführt. Dieser Erfindungsgedanke basiert auf der Erkenntnis, dass auch Alt-Koks noch ein ausreichendes Adsorptionspotenzial hat, und zwar vorteilhafterweise sogar ohne zusätzliche Mahlaktivierung, weil bei einer Entnahme aus Adsorbern (Rezirkulation) große Mengen an pulverförmigen Feststoffen bewegt werden, so dass es hierdurch praktisch "automatisch" zu einer Art Aufmahlung kommt, wodurch die bereits beladene (besetzte) Oberfläche des Alt-Koks aufgebrochen und somit neue freie Oberflächen geschaffen werden. Dadurch kann der Alt-Koks vorteilhafterweise ohne zusätzliche Aufmahlung und somit auch ohne zusätzliche Energiekosten unmittelbar der Rauchgas-Reinigung zugeführt werden. Es erübrigt sich somit an dieser Stelle der Einsatz von frischem Adsorbens (Frisch-Koks), was zu einer deutlichen Kostenersparnis führt.

Es ist vorgesehen, dass der Alt-Koks aus der erfindungsgemäßen Anlage selbst stammt, da das Rauchgas nach der (wie oben als allgemeiner Überbegriff definierten) Rauchgas-Reinigung durch einen Wanderbettadsorber geleitet wird, der ein Kohlenstoff-Adsorbens (HOK) enthält. Es wird das nach einer bestimmten Nutzungsdauer mit Schadstoffen beladene Kohlenstoff-Adsorbens aus dem Wanderbettadsorber zumindest anteilig zu der Rauchgas-Reinigung rezirkuliert und dort als Reagenz zur Schwermetall-Abscheidung zugeführt. Natürlich wird dann dem Wanderbettadsorber ein entsprechendes Volumen von frischem Adsorbens wieder zugeführt. Als bevorzugte Maßnahme wird von dem insgesamt aus dem Wanderbettadsorber anfallenden Volumen des beladenen Adsorbens ein Anteil von 0 % bis zu etwa 50 % in den Verbrennungskessel geführt und dort verbrannt oder aber unter Tage endgelagert, während der übrigen Anteil von mindestens etwa 50 % des beladenen Adsorbens dem Rauchgas für die Reinigung zugeführt wird. Dadurch ist dort insbesondere eine so genannte Hg-Senke gewährleistet.

Durch die Erfindung kann somit Alt-Koks noch mit großem Nutzen verwertet werden, anstatt ihn im Grunde nutzlos oder sogar mit Nachteilen zu verbrennen oder unter Tage zu lagern. In Müllverbrennungsanlagen kommt dies auch der verbrennbaren Müllmenge zu Gute, weil die Kapazität des Verbrennungskessels vollständig oder zumindest mit erhöhtem Anteil zur Müllverbrennung zur Verfügung steht und nicht oder zumindest in reduziertem Maße durch Verbrennung von Alt-Koks eingeschränkt wird.

Als weiterer wichtiger Vorteil führt die zumindest reduzierte oder sogar entfallende Verbrennung von Alt-Koks auch zu einer Reduzierung einer Quecksilber-Mobilisierung, so dass auch eine entsprechend geringere Dosierung des Kohlenstoff-Adsorbens (Koks) in der Rauchgas-Reinigung ausreicht.

Im Folgenden soll die Erfindung anhand der Zeichnung beispielhaft weiter erläutert werden. Es zeigen:
- Fig. 1: ein vereinfachtes beispielhaftes Blockschaltbild einer nicht erfindungsgemäßen Anlage zur Rauchgas-Reinigung in einer Mindestausführung und
- Fig. 2: ein Blockschaltbild einer bevorzugten Ausgestaltung der erfindungsgemäßen Anlage.

In den verschiedenen Figuren der Zeichnung sind gleiche Teile stets mit den gleichen Bezugszeichen versehen.

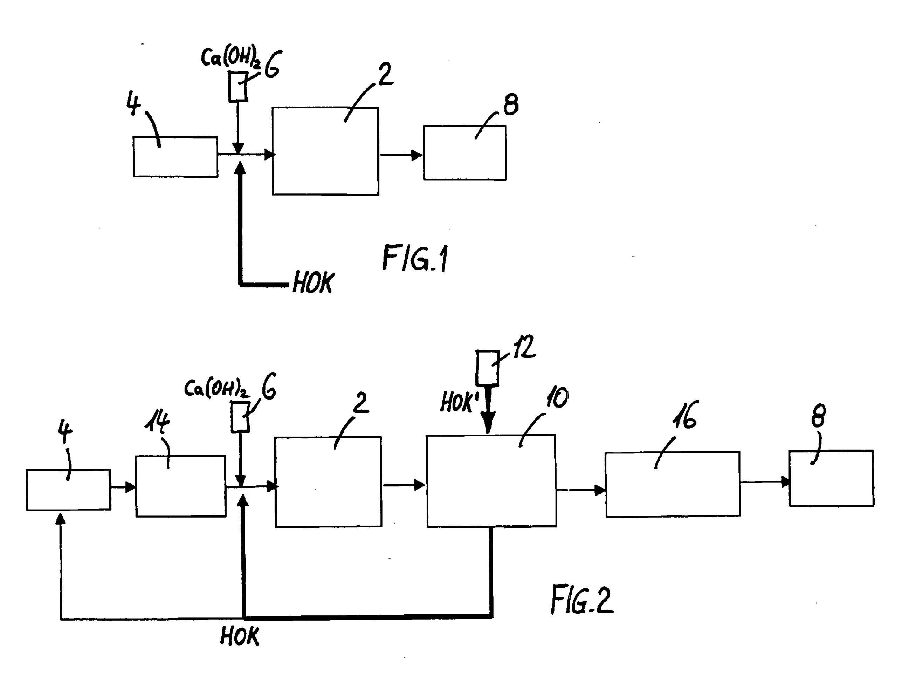

Wie sich zunächst aus Fig. 1 ergibt, besteht eine nicht erfindungsgemäße Anlage zur Rauchgas-Reinigung zum Beispiel aus einer Trockensorptionsstufe 2, die einem Verbrennungskessel 4 nachgeordnet ist. Es wird dem aus dem Verbrennungskessel 4 kommenden Rauchgas vor der Trockensorptionsstufe 2 über geeignete, nicht dargestellte Mittel als Reagenz zur Schwermetall-Abscheidung ein mit Schadstoffen beladenes Kohlenstoff-Adsorbens HOK zugeführt. In bevorzugter Ausgestaltung sind zudem Mittel 6 zum Zuführen von Calciumhydroxid (Ca(OH)₂, auch Kalkhydrat oder gelöschter Kalk genannt) als Reagenz zum Abscheiden von sauren Schadgasen in der Trockensorptionsstufe 2 vorgesehen. An den zugeführten Reagenzien werden dann durch chemische Reaktion Schadstoffe gebunden, insbesondere Schwermetalle, wie Quecksilber, sowie saure Schadgase, wie Chlorwasserstoff, Fluorwasserstoff und Schwefeldioxid. Die so beladenen Reagenzien werden in der Trockensorption an einem Filter abgeschieden und dann entsorgt. Das übrige Rauchgas wird dann einem Kamin 8 zugeführt. Bevorzugt wird in der Trockensorptionsstufe 2 eine konditionierte Trockensorption durchgeführt.

In der in Fig. 2 beispielhaft dargestellten Ausgestaltung der erfindungsgemäßen Anlage ist der Trockensorptionsstufe 2 ein Wanderbettadsorber 10 nachgeordnet, der als Reagenz ein Kohlenstoff-Adsorbens enthält. Das aus der Trockensorptionsstufe 2 kommende Rauchgas wird in kontinuierlicher Durchströmung durch den Wanderbettadsorber 10 geleitet, wobei weitere Schadstoffe durch Anlagerung an dem Adsorbens abgeschieden werden. Das dadurch mit Schadstoffen beladene Kohlenstoff-Adsorbens HOK wird dann bevorzugt über geeignete, nicht näher dargestellte Mittel aus dem Wanderbettadsorber 10 zur Trockensorptionsstufe 2 rezirkuliert, und zwar zumindest zu einem bestimmten Anteil von mindestens 10 % bis maximal 100 %. Ein gegebenenfalls verbleibender Anteil des beladenen Kohlenstoff-Adsorbens HOK wird über geeignete Mittel aus dem Wanderbettadsorber 10 in den Verbrennungskessel 4 befördert und dort verbrannt. Dieser Anteil des beladenen Adsorbens HOK kann 0 % bis 90 % betragen. In bevorzugter Ausgestaltung werden aber maximal etwa 50 % des aus dem Wanderbettadsorber 10 abgeführten Adsorbens HOK im Verbrennungskessel 4 verbrannt, während der übrige Anteil für die Trockensorptionsstufe 2 rezirkuliert wird.

Gemäß Fig. 2 verfügt der Wanderbettadsorber 10 natürlich auch über Mittel 12 zum Zuführen von frischem Kohlenstoff-Adsorbens HOK'.

In der in Fig. 2 dargestellten bevorzugten Ausführung der erfindungsgemäßen Anlage ist der beispielhaft zur Rauchgas-Reinigung eingesetzten Trockensorptionsstufe 2 ein Filter 14, insbesondere ein Elektrofilter, zur Entstaubung des Rauchgases vorgeordnet, was allerdings nicht unbedingt notwendig ist. Zudem ist vorzugsweise ein SCR-Katalysator 16 vorgesehen, der insbesondere dem Kamin 8 direkt vorgeordnet ist. In dem SCR-Katalysator 16 wird das Rauchgas vor Ableitung in den Kamin 8 einer selektiven katalytischen Reduktion von Stickoxiden unterzogen. Dazu wird in an sich bekannter Weise Ammoniak NH₃ zugeführt.

Ergänzend sei noch erwähnt, dass für die erfindungsgemäße Rauchgas-Reinigung, also z. B. für die Trockensorption, ein Temperaturniveau unter 170°C angestrebt wird, um eine Entzündung des Kohlenstoff-Adsorbens HOK zu vermeiden. Vorzugsweise wird ein Temperaturniveau im Bereich von 130°C bis 145°C und besonders bevorzugt 135°C bis 140°C vorgegeben.

Ein entsprechendes Temperaturniveau gilt auch für den bevorzugt nachgeordneten Wanderbettadsorber 10.

Da somit in der Trockensorptionsstufe 2 und dem nachgeordneten Wanderbettadsorber 10 bevorzugt das gleiche Temperaturniveau herrscht, ist vorteilhafterweise eine Desorption bzw. Mobilisation von Quecksilber auszuschließen. Dies bedeutet, dass durch die erfindungsgemäße Verwertung des beladenen Kohlenstoff-Adsorbens HOK eine Freisetzung von zusätzlichem Quecksilber vermieden wird.

Durch die Erfindung werden zumindest folgende wichtige Vorteile erreicht:
- nahezu uneingeschränkte Verbrennungsleistung im Verbrennungskessel,
- Einsparung von Frisch-Koks,
- Hg-Senke bleibt gesichert,
- keine zusätzliche Energie für eine Mahlaktivierung notwendig.

Die Erfindung ist nicht auf die dargestellten und beschriebenen Ausführungsbeispiele beschränkt, sondern umfasst auch alle im Sinne der Erfindung gleichwirkenden Ausführungen. So kann insbesondere an Stelle der Trockensorptionsstufe 2 auch eine Nasswäscherstufe eingesetzt werden.

## Patentansprüche

1. Verfahren zur Rauchgas-Reinigung durch Trockensorption in einer Trockensorptionsstufe (2), in welcher simultan eine Staub- und Schadstoffabscheidung an einem Gewebefilter erfolgt, oder durch Nasswäsche in einer Nasswäscherstufe, wobei dem Rauchgas zum Abscheiden von Schwermetall, insbesondere von Quecksilber, als Reagenz zur Schwermetall-Abscheidung ein bereits mit Schadstoffen beladenes Kohlenstoff-Adsorbens (HOK) zugeführt wird,
**dadurch gekennzeichnet, dass** vor der Zuführung des mit Schadstoffen beladenen Kohlenstoff-Adsorbens (HOK) durch Feststoffbewegung und gegebenenfalls eine zusätzliche Mahlaktivierung an dem mit Schadstoffen beladenen Kohlenstoff-Adsorbens (HOK) bereits mit Schadstoffen beladene Oberflächen aufgebrochen und neue freie Oberflächen geschaffen werden, wobei dem Rauchgas in der Trockensorptionsstufe (2) oder Nasswäscherstufe ausschließlich beladenes Kohlenstoff-Adsorbens (HOK), d. h. kein unbeladenes frisches Kohlenstoff-Adsorbens (HOK'), zugeführt wird, wobei das Rauchgas durch einen der Trockensorptionsstufe (2) oder Nasswäscherstufe nachgeordneten, kontinuierlich durchströmten Wanderbettadsorber (10) geleitet wird, der ein Kohlenstoff-Adsorbens (HOK') enthält und aus dem nach einer bestimmten Benutzungszeit das mit Schadstoffen beladene Kohlenstoff-Adsorbens (HOK) als Reagenz zur Schwermetall-Abscheidung der Trockensorptionsstufe (2) oder Nasswäscherstufe zugeführt wird wobei dem Wanderbettadsorber (10) frisches Kohlenstoff-Adsorbens (HOK') zugeführt wird.

2. Verfahren nach Anspruch 1,
**dadurch gekennzeichnet, dass** dem Rauchgas als weiteres Reagenz Calciumhydroxid, Natriumhydrogencarbonat und/oder eine Waschflüssigkeit zum Abscheiden von sauren Schadgasen zugeführt wird.

3. Verfahren nach Anspruch 1 oder 2,
**dadurch gekennzeichnet, dass** ein Anteil von insbesondere bis zu etwa 50 % des beladenen Kohlenstoff-Adsorbens (HOK) aus dem Wanderbettadsorber (10) in den Verbrennungskessel (4) geführt und dort verbrannt wird, und dass der übrige Anteil von mindestens etwa 50 % des beladenen Kohlenstoff-Adsorbens (HOK) dem Rauchgas für die Rauchgas-Reinigung zugeführt wird.

4. Verfahren nach einem der Ansprüche 1 bis 3,
**dadurch gekennzeichnet, dass** für die Rauchgas-Reinigung insbesondere durch konditionierte Trockensorption ein Temperaturniveau unter 170°C und insbesondere im Bereich von 130°C bis 145°C vorgegeben wird.

5. Verfahren nach einem der Ansprüche 1 bis 4,
**dadurch gekennzeichnet, dass** das Rauchgas vor der eigentlichen Rauchgas-Reinigung zur Entstaubung gefiltert wird.

6. Verfahren nach einem der Ansprüche 1 bis 5,
**dadurch gekennzeichnet, dass** das Rauchgas nach der Rauchgas-Reinigung und vor Ableitung in einen Kamin (8) einer selektiven katalytischen Reduktion von Stickoxiden unterzogen wird.

7. Anlage zur Rauchgas-Reinigung nach dem Verfahren gemäß einem der vorhergehenden Ansprüche, mit einer einem Verbrennungskessel (4) nachgeordneten Trockensorptionsstufe (2), in welcher simultan eine Staub- und Schadstoffabscheidung an einem Gewebefilter erfolgt, oder mit einer dem Verbrennungskessel (4) nachgeordneten Nasswäscherstufe, wobei zwischen dem Verbrennungskessel (4) und der nachgeordneten Trockensorptionsstufe (2) oder Nasswäscherstufe Mittel zum Zuführen eines mit Schadstoffen beladenen Kohlenstoff-Adsorbens (HOK) als Reagenz zur Schwermetall-Abscheidung angeordnet sind,
**dadurch gekennzeichnet, dass** die Mittel zum Zuführen des mit Schadstoffen beladenen Kohlenstoff-Adsorbens (HOK) mit einem der Trockensorptionsstufe (2) oder Nasswäscherstufe nachgeordneten, kontinuierlich durchströmten Wanderbettadsorber (10) in Verbindung stehen, aus dem jeweils das mit Schadstoffen beladene Kohlenstoff-Adsorbens (HOK) stammt, und welcher seinerseits Mittel zum Zuführen von frischem Kohlenstoff-Adsorbens (HOK') aufweist.

8. Anlage nach Anspruch 7,
**gekennzeichnet durch** Mittel für eine anteilige Überführung des beladenen Kohlenstoff-Adsorbens (HOK) aus dem Wanderbettadsorber (10) in den Verbrennungskessel (4).

9. Anlage nach einem der Ansprüche 7 bis 8,
**gekennzeichnet durch** Mittel (6) zum Zuführen von Calciumhydroxid, Natriumhydrogencarbonat oder einer Waschflüssigkeit als Reagenz zum Abscheiden von sauren Schadgasen.

10. Anlage nach einem der Ansprüche 7 bis 9,
**gekennzeichnet durch** einen der eigentlichen Rauchgas-Reinigung vorgeordneten Filter (14), insbesondere Elektrofilter, zur Entstaubung des Rauchgases.

11. Anlage nach einem der Ansprüche 7 bis 10,
**gekennzeichnet durch** einen SCR-Katalysator (16), der insbesondere einem Kamin (8) direkt vorgeordnet ist.

## Claims

1. A method for flue-gas purification by dry sorption in a dry sorption stage (2), in which separation of dust and pollutants takes place simultaneously on a fabric filter, or by wet scrubbing in a wet scrubber stage, wherein a carbon adsorbent (HOK) already laden with pollutants is supplied to the flue gas in order to separate off heavy metals, in particular mercury, as a reagent for separating off heavy metals,
**characterised in that**, before the carbon adsorbent (HOK) laden with pollutants is supplied, by solids movement and optionally additional grinding activation on the carbon adsorbent (HOK) laden with pollutants, surfaces already laden with pollutants are broken up and new free surfaces are provided, with exclusively laden carbon adsorbent (HOK), i.e. no unladen fresh carbon adsorbent (HOK'), being supplied to the flue gas in the dry sorption stage (2) or wet scrubber stage, with the flue gas being passed through a moving-bed adsorber (10), through which there is a continuous flow, succeeding the dry sorption stage (2) or wet scrubber stage, which absorber contains a carbon adsorbent (HOK') and from which after a certain usage time the carbon adsorbent (HOK) laden with pollutants is supplied as reagent for separating off heavy metals to the dry sorption stage (2) or wet scrubber stage, with fresh carbon adsorbent (HOK') being supplied to the moving-bed adsorber (10).

2. A method according to Claim 1,
**characterised in that** calcium hydroxide, sodium hydrogen carbonate and/or a washing liquid for separating off acidic harmful gases is added to the flue gas as a further reagent.

3. A method according to Claim 1 or 2,
**characterised in that** a proportion of in particular up to approximately 50% of the laden carbon adsorbent (HOK) is guided from the moving-bed adsorber (10) into the combustion boiler (4) and is burned therein, and **in that** the remaining proportion of at least approximately 50% of the laden carbon adsorbent (HOK) is supplied to the flue gas for the flue-gas purification.

4. A method according to one of Claims 1 to 3,
**characterised in that** a temperature level of below 170°C and in particular in the range of 130°C to 145°C is specified for the flue-gas purification in particular by conditioned dry sorption.

5. A method according to one of Claims 1 to 4,
**characterised in that** the flue gas is filtered for dedusting before the flue-gas purification proper.

6. A method according to one of Claims 1 to 5,
**characterised in that** the flue gas, after the flue-gas purification and before it is withdrawn into a chimney (8), is subjected to selective catalytic reduction of nitrogen oxides.

7. An installation for flue-gas purification in accordance with the method according to one of the preceding claims, with a dry sorption stage (2) which succeeds a combustion boiler (4), in which stage separation of dust and pollutants takes place simultaneously on a fabric filter, or with a wet scrubber stage which succeeds the combustion boiler (4), with means for supplying a carbon adsorbent (HOK) laden with pollutants as a reagent for separating off heavy metals being arranged between the combustion boiler (4) and the succeeding dry sorption stage (2) or wet scrubber stage,
**characterised in that** the means for supplying the carbon adsorbent (HOK) laden with pollutants are connected to a moving-bed adsorber (10), through which there is a continuous flow, which succeeds the dry sorption stage (2) or wet scrubber stage, from which adsorber in each case the carbon adsorbent (HOK) laden with pollutants originates, and which in turn has means for supplying fresh carbon adsorbent (HOK').

8. An installation according to Claim 7,
**characterised by** means for proportional transfer of the laden carbon adsorbent (HOK) out of the moving-bed adsorber (10) into the combustion boiler (4).

9. An installation according to one of Claims 7 to 8,
**characterised by** means (6) for supplying calcium hydroxide, sodium hydrogen carbonate or a washing liquid as a reagent for separating off acidic harmful gases.

10. An installation according to one of Claims 7 to 9,
**characterised by** a filter (14), in particular electrostatic precipitator, for dedusting the flue gas which precedes the flue-gas purification proper.

11. An installation according to one of Claims 7 to 10,
**characterised by** an SCR catalyst (16), which in particular is arranged directly preceding a chimney (8).

## Revendications

1. Procédé pour le nettoyage de gaz de fumée par sorption sèche dans un étage de sorption sèche (2), dans lequel ont lieu simultanément une séparation de poussières et de substances polluantes en un filtre de tissu, ou par lavage humide dans un étage de lavage humide, un adsorbant carbone déjà chargé en substances polluantes (HOK) étant amené aux gaz de fumée en tant que réactif pour la séparation de métaux lourds afin de séparer des métaux lourds, en particulier du mercure,
**caractérisé en ce que** des surfaces déjà chargées en substances polluantes sont rompues et de nouvelles surfaces libres sont créées par déplacement de substances solides et éventuellement par une activation supplémentaire par broyage en l'adsorbant à carbone chargé en substances polluantes (HOK) avant l'amenée de l'adsorbant à carbone chargé en substances polluantes (HOK), seulement un adsorbant à carbone chargé (HOK), en d'autres termes aucun adsorbant à carbone frais non chargé (HOK'), étant amené aux gaz de fumée dans l'étage de sorption sèche (2) ou dans l'étage de lavage humide, les gaz de fumée étant acheminés à travers un dispositif d'adsorption à lit mobile (10) parcouru en continu, disposé en aval de l'étage de sorption sèche (2) ou de l'étage de lavage humide, lequel contient un adsorbant à carbone (HOK') et depuis lequel, après une durée d'utilisation définie, l'adsorbant à carbone chargé en substances polluantes (HOK) est amené en tant que réactif pour la séparation de métaux lourds à l'étage de sorption sèche (2) ou à l'étage de lavage humide, un adsorbant à carbone frais (HOK') étant amené au dispositif d'adsorption à lit mobile (10).

2. Procédé selon la revendication 1,
**caractérisé en ce que** de l'hydroxyde de calcium, du bicarbonate de sodium et/ou du liquide de lavage pour séparer des gaz polluants acides sont amenés aux gaz de fumée en tant qu'autre réactif.

3. Procédé selon la revendication 1 ou 2,
**caractérisé en ce qu'**une fraction pouvant aller en particulier jusqu'à environ 50 % de l'adsorbant à carbone chargé (HOK) est conduite depuis le dispositif d'adsorption à lit mobile (10) dans la cuve de combustion (4) pour y être brûlée, et **en ce que** la fraction restante d'au moins environ 50 % de l'adsorbant à carbone chargé (HOK) est amenée aux gaz de fumée pour le nettoyage de gaz de fumée.

4. Procédé selon l'une quelconque des revendications 1 à 3,
**caractérisé en ce qu'**un niveau de température en dessous de 170 °C et en particulier compris dans la plage de 130 °C à 145 °C est spécifié pour le nettoyage de gaz de fumée, en particulier par sorption sèche conditionnée.

5. Procédé selon l'une quelconque des revendications 1 à 4,
**caractérisé en ce que** les gaz de fumée sont filtrés avant le nettoyage de gaz de fumée à proprement parler aux fins du dépoussiérage.

6. Procédé selon l'une quelconque des revendications 1 à 5,
**caractérisé en ce que** les gaz de fumée sont soumis, après le nettoyage de gaz de fumée et avant leur évacuation dans une cheminée (8), à une réduction catalytique sélective des oxydes d'azote.

7. Installation pour le nettoyage de gaz de fumée selon le procédé selon l'une quelconque des revendications précédentes, comprenant un étage de sorption sèche (2) disposé en aval d'une cuve de combustion (4), dans lequel sont effectuées simultanément une séparation de poussières et de substances polluantes en un filtre en tissu, ou comprenant un étage de lavage humide disposé en aval de la cuve de combustion (4), des moyens pour amener un adsorbant à carbone chargé en substances polluantes (HOK) en tant que réactif pour séparer des métaux lourds sont disposés entre la cuve de combustion (4) et l'étage de sorption sèche (2) ou l'étage de lavage humide disposé en aval,
**caractérisée en ce que** les moyens pour amener l'adsorbant à carbone chargé en substances polluantes (HOK) sont en liaison avec un dispositif d'adsorption à lit mobile (10) parcouru en continu, disposé en aval de l'étage de sorption sèche (2) ou de l'étage de lavage humide, duquel provient respectivement l'adsorbant à carbone chargé en substances polluantes (HOK) et lequel présente pour sa part des moyens pour amener un adsorbant à carbone frais (HOK').

8. Installation selon la revendication 7,
**caractérisée par** des moyens servant à transférer de manière proportionnelle l'adsorbant à carbone chargé (HOK) du dispositif d'adsorption à lit mobile (10) dans la cuve de combustion (4).

9. Installation selon l'une quelconque des revendications 7 à 8,
**caractérisée par** des moyens (6) pour amener de l'hydroxyde de calcium, du bicarbonate de sodium ou du liquide de lavage en tant que réactif pour séparer des gaz polluants acides.

10. Installation selon l'une quelconque des revendications 7 à 9,
**caractérisée par** un filtre (14) disposé en amont du nettoyage de gaz de fumée à proprement parler, en particulier un électrofiltre, pour dépoussiérer les gaz de fumée.

11. Installation selon l'une quelconque des revendications 7 à 10,
**caractérisée par** un catalyseur à réduction catalytique sélective (16) qui est disposé en parti-culier directement en amont d'une cheminée (8).
